(19) Europäisches Patentamt

European Patent Office

Office européen des brevets

(11) **EP 1 626 605 A1**

(12) **EUROPEAN PATENT APPLICATION**

(43) Date of publication:
**15.02.2006 Bulletin 2006/07**

(51) Int Cl.:
**H04Q 7/38** (2006.01)

(21) Application number: **05017547.0**

(22) Date of filing: **11.08.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **11.08.2004 KR 2004063250**

(71) Applicant: **Samsung Electronics Co, Ltd**
**Suwon-si, Gyeonggi-do (KR)**

(72) Inventors:
• **Jeong, Kyeong-In c/o Samsung Electronics Co.,Ltd**
  **Suwon-si,**
  **Gyeonggi-do (KR)**
• **Lee, Kook-Heui c/o Samsung Electronics Co.,Ltd**
  **Suwon-si,**
  **Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(54) **Method and system for cell selection/reselection taking into account congestion status of target cell in a mobile communication system**

(57) A method and system for ensuring continuous service reception at a UE for each access class by carrying out cell selection/reselection taking into account the congestion status of a target cell in a mobile communication system. The method and system takes into account the congestion status of a target cell, and the UE selects/reselects the target cell of which the access class barred list indicates the access class of the UE as not barred. For cell selection/reselection, the UE can refer to the access class barred list of the target cell all the time, or only when it is necessary to access the network for a specific service indicated by an upper layer.

FIG.3

EP 1 626 605 A1

**Description**

BACKGROUND OF THE INVENTION

Field of the Invention:

The present invention relates generally to a cell selection/reselection method and system in a mobile communication system. More particularly, the present invention relates to a method and system for ensuring continuous service reception at a user equipment (UE) for each access class by carrying out cell selection/reselection taking into account the congestion status of a target cell.

Description of the Related Art:

A typical 3GPP (3rd Generation Partnership Project) mobile communication system controls the congestion of a cell by the use of an access class barred list, and a UE is allowed or denied access to the network according to its access class under the access class barred list.

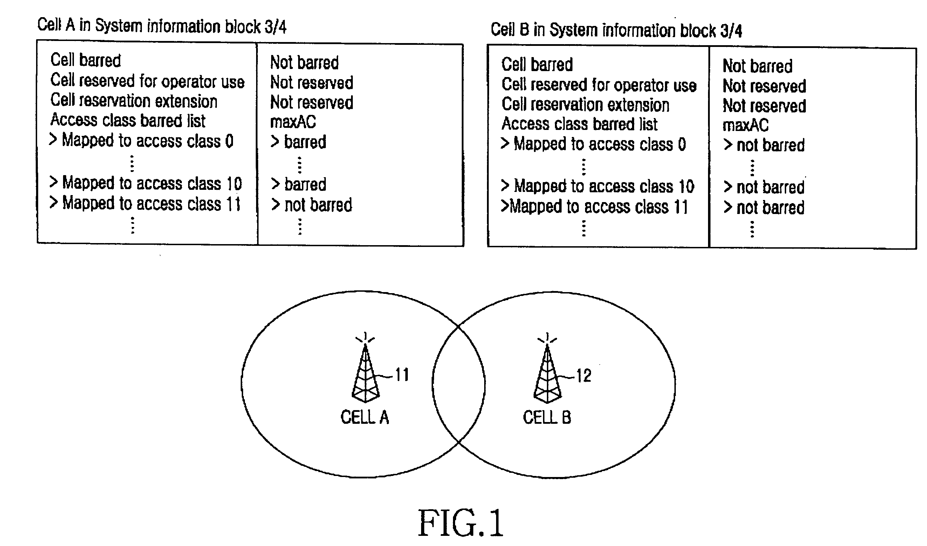

FIG. 1 illustrates cell selection/reselection which is performed without referring to an access class barred list in a mobile communication system. In FIG. 1, both cell A and cell B under the coverage of a Node B 11 and a Node B 12 belong to the same PLMN (Public Land Mobile Network). It is determined whether the strengths of P-CPICH (Primary-Common Pilot CHannel) signals from cell A and cell B measured at a UE, satisfy a threshold S being a minimum cell selection criterion.

Cell reselection criteria for FDD (Frequency Division Duplex) cells and TDD (Time Division Duplex) cells as specified by the 3GPP are as follows. As shown in Equations (1), the threshold S is fulfilled when,

$$\text{For FDD cells: } Srxlev > 0 \text{ and } Squal > 0 \qquad (1)$$

$$\text{For TDD cells: } Srxlev > 0$$

wherein Srxlev represents a cell selection RX level value (dB), and Squal represents a cell selection quality value (dB). Squal applies only for FDD cells. Thus, an FDD cell attains a minimum qualification for cell selection only if both Srxlev and Squal are greater than 0. The variables Srxlev and Squal are defined as shown below in Equations (2),

$$Squal: Qqualmeas - Qqualmin \qquad (2)$$

$$Srxlev = Qrxlevmeas - Qrxlevmin - Pcompensation$$

wherein Qqualmeas represents a measured cell quality value (dB), the quality of the received signal expressed in the chip energy-to-noise ratio (Ec/No) of the CPICH, and Qqualmin represents a minimum required quality level (dB) in the cell. For Squal to be larger than 0, Ec/No of the CPICH from a cell measured at the UE must be larger than the minimum required quality level of the cell.

In Equations (2), Qrxlevmeas represents a measured cell RX level value. This is CPICH RSCP (Receive Signal Code Power) (dBm) for FDD cells and P-CCPCH (Primary-Common Control Physical CHannel) RSCP (dBm) for TDD cells.

The variable Qrxlevmin is a minimum required Rx level (dBm) in the cell, and Pcompensation is computed by max(UE_TXPWR_MAX_RACH-P_MAX, 0) (dB). The variable UE_TXPWR_MAX_RACH is a maximum TX power level that the UE may use when accessing the cell on an RACH (Random Access CHannel), and P_MAX is a maximum allowed transmit power for the UE.

Cells satisfying the minimum cell selection criterion are sequentially prioritized according to their rankings R for cell reselection. The variable R is obtained by comparing the offset of a serving cell with that of a neighbor cell as shown below in Equation (3). Further, the variable R is used for cell reselection, not for cell selection. In Equations (3),

$$Rs = Qmeas,s + Qhysts \hspace{3cm} (3)$$

$$Rn = Qmeas,n - Qoffset,n - Ton^{\bullet}(1\text{-}Ln)$$

wherein Rs represents the ranking of the serving cell, Rn represents the ranking of the neighbor cell, Qmeas,s represents the measured radio strength of the serving cell, and Qmeas,n represents the measured radio strength of the neighbor cell. For FDD cells, Qmeas,s and Qmeas,n are the quality levels of received signals derived from CPICH Ec/No or CPICH RSCPs from the serving cell and the neighbor cell. For TDD cells, Qmeas,s and Qmeas,n are received signal quality levels derived from P-CCPCH RSCP. In Equations (3), Qhysts and Qoffset,n represent the offsets of the serving cell and the neighbor cell, respectively. These values are broadcast to the UE in system information by the cells. The variable Ton*(1-Ln) applies when HCS (Hierarchical Cell Structure) is used as a cell structure. The variable Ton is a parameter for preventing the ping-pong phenomenon in the HCS, and Ln is 0 if the HCS level of the serving cell is equal to that of the neighbor cell, and is 1 otherwise.

In the illustrated case of FIG. 1, if cell A with $R_A$=X[dB] ranks higher than cell B with $R_B$=X-0.1[dB], the UE determines whether cell A can be selected/reselected by receiving system information from cell A. This determination involves checking whether cell A belongs to an allowed PLMN and checking whether cell status information of the system information indicates cell A as barred for cell selection/reselection.

In the example of FIG. 1, it can be assumed that both cell A and cell B belong to an allowed PLMN, and only system information block 3/4 including cell status information is shown in FIG. 1. The cell status information indicates cell A as not barred for cell selection/reselection. The cell status information comprises the information elements (IEs) of Cell barred, Cell reserved for operator use, and Cell reservation on extension.

Once the UE confirms that the radio measurement of cell A satisfies the threshold S, that cell A ranks highest, that cell A belongs to an allowed PLMN in the system information, and that the cell status information indicates cell A as not barred for cell selection/reselection, it selects/reselects cell A. Notably, cell selection does not involve ranking cells sequentially according to their rankings R, while cell reselection involves computation using R.

However, if a cell is not allowed for the access class of the UE in the network due to cell congestion, an emergency call, as well as a basic call, is not allowed for the UE in the cell. For example, if access class 9 is allocated to the UE and the access class barred list for cell A is made as illustrated in FIG. 1, even though the UE selects/reselects cell A, access to the network is impossible in cell A. Consequently, the UE cannot make either emergency calls or basic calls.

Accordingly, a need exists for a system and method for ensuring continuous service reception at a user equipment (UE).

## SUMMARY OF THE INVENTION

An object of the present invention is to substantially solve at least the above problems and disadvantages, and to provide at least the advantages discussed below. Accordingly, embodiments of the present invention provide a cell selection/reselection method and system based on the congestion status of a target cell for a UE in a mobile communication system.

Embodiments of the present invention further provide a cell selection/reselection method and system based on the access class barred list of a target cell for a UE in a mobile communication system.

Embodiments of the present invention still further provide a cell selection/reselection method and system for a UE, in which, if the access class barred list of a target cell is divided into a circuit service (CS) domain and a packet service (PS) domain, allowed service domains are prioritized in a mobile communication system.

Embodiments of the present invention still further provide a cell selection/reselection method and system for a UE, in which, the UE preferably always refers to the access class barred list of a target cell for cell selection/reselection in a mobile communication system.

Embodiments of the present invention still further provide a cell selection/reselection method and system for a UE, in which, the UE refers to the access class barred list of a target cell for cell selection/reselection when needed to access a network for a service in a mobile communication system.

According to one aspect of embodiments of the present invention, a cell selection method is provided in a mobile communication system and comprises the steps of, where a UE measures the radio strength of a cell being a candidate for cell selection, determining whether the radio strength satisfies a predetermined threshold, receiving system information including an access class barred list from a Node B that manages the cell if the radio strength satisfies the threshold, and selecting the cell according to the access class barred list.

According to another aspect of embodiments of the present invention, a cell reselection method is provided in a mobile communication system and comprises the steps of, where a UE measures the radio strengths of cells being candidates for cell reselection, determining whether the radio strengths satisfy a predetermined threshold, prioritizing cells that satisfy the threshold, receiving system information including an access class barred list from a Node B managing a cell that satisfies the threshold and ranks highest, and selecting the cell if the system information allows the UE to select the cell and the access class barred list does not indicate that the cell is not accessible to the UE.

According to a further aspect of embodiments of the present invention, a cell selection method is provided in a mobile communication system and comprises the steps of, where a UE distinguishes a plurality of service domains for cell selection and measures the radio strength of a cell being a candidate for cell selection, determining whether the radio strength satisfies a predetermined threshold, receiving system information including access class barred lists for the service domains from a Node B that manages the cell if the radio strength satisfies the threshold, and selecting the cell if the access class barred lists indicate that the cell is accessible to the UE in the service domains.

According to still another aspect of embodiments of the present invention, a cell reselection method is provided in a mobile communication system and comprises the steps of, where a UE distinguishes a plurality of service domains for cell reselection and measures the radio strengths of cells being candidates for cell reselection, determining whether the radio strengths satisfy a predetermined threshold, prioritizing cells that satisfy the threshold, receiving system information including access class barred lists for the service domains from a Node B managing a cell with the highest ranking among the prioritized cells, and selecting the cell if the access class barred lists indicate the cell as accessible in all of the service domains.

According to yet another aspect of embodiments of the present invention, a cell reselection method is provided in a mobile communication system and comprises the steps of, where a UE distinguishes a plurality of service domains for cell reselection and receives an indication indicating starting of a service in one of the service domains from an upper layer, determining whether the access class barred list of the indicated service domain indicates a serving cell as accessible, measuring the radio strengths of cells being candidates for cell reselection if the serving cell is not indicated as accessible, determining whether the radio strengths satisfy a predetermined threshold, prioritizing cells that satisfy the threshold, receiving system information including access class barred lists for the plurality of service domains from a Node B managing a cell with the highest ranking among the prioritized cells, and selecting the cell if the access class barred list of the indicated service domain indicates the cell as accessible.

According to yet another aspect of embodiments of the present invention, a mobile communication system is provided comprising, where a UE measures the radio strengths of cells being candidates for cell reselection, an element to determine whether the radio strengths satisfy a predetermined threshold, an element to prioritize cells that satisfy the threshold, an element to receive system information including access class barred lists for a plurality of service domains from a Node B managing a cell with the highest ranking among the prioritized cells, and an element to select the cell if the access class barred lists indicate the cell as accessible in all of the service domains. At least one Node B is configured to manage at least one cell that the UE can access wirelessly and transmit the system information to the UE.

BRIEF DESCRIPTION OF THE DRAWINGS

The above and other objects, features and advantages of the present invention will become more apparent from the following detailed description when taken in conjunction with the accompanying drawings, in which:

FIG. 1 illustrates cell selection/reselection performed without referring to an access class barred list in a mobile communication system;
FIGs. 2A and 2B are flowcharts illustrating a cell selection/reselection method based on an access class barred list in a mobile communication system according to an embodiment of the present invention;
FIG. 3 illustrates transmission of separate access class barred lists for a CS domain and a PS domain, for use in cell selection/reselection in a mobile communication system according to an embodiment of the present invention;
FIGs. 4A and 4B are flowcharts illustrating a cell selection/reselection method in a UE in a mobile communication system according to another embodiment of the present invention; and
FIGs. 5A and 5B are flowcharts illustrating a cell reselection method in the UE in a mobile communication system according to another embodiment of the present invention.

Throughout the drawings, like reference numerals will be understood to refer to like parts, components and structures.

DETAILED DESCRIPTION OF THE EXEMPLARY EMBODIMENTS

A number of exemplary embodiments of the present invention will be described herein below with reference to the accompanying drawings. In the following description, functions or constructions that are well known to those skilled in the art are not described in detail for clarity and conciseness.

A basic concept of embodiments of the present invention is that a UE selects/reselects a cell referring to an access class barred list representing the congestion status of a target cell, as well as cell status information in received system information, to thereby ensure continuous service reception for each access class. Embodiments of the present invention will be described in the context of a 3GPP (3$^{rd}$ generation asynchronous mobile communication standard) system, by way of example.

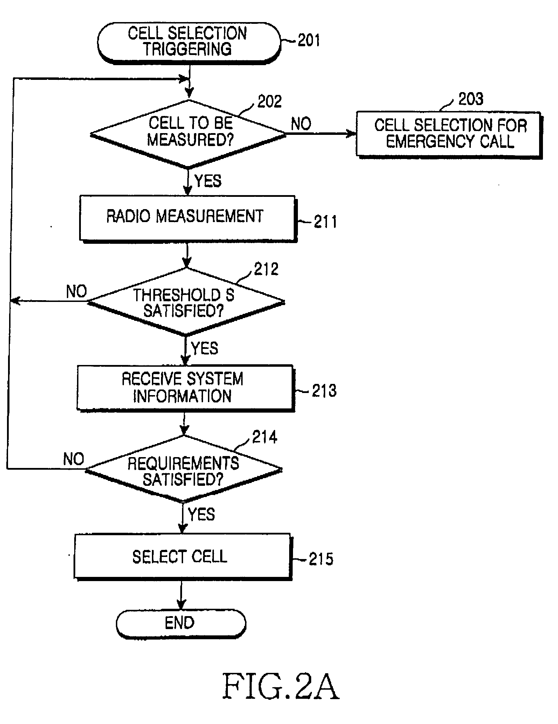

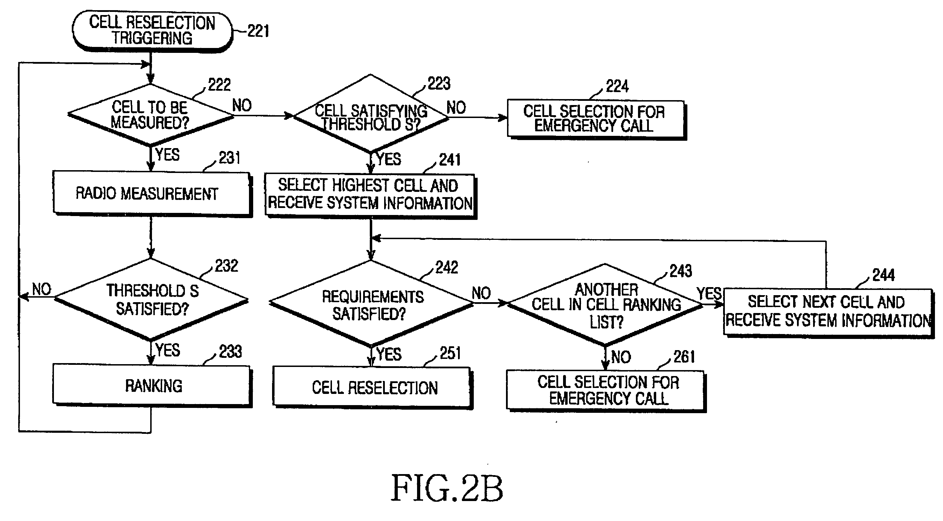

FIGs. 2A and 2B are flowcharts illustrating a method of performing cell selection/reselection referring to an access class barred list in a mobile communication system according to an embodiment of the present invention. The procedure illustrated in FIG. 2A is in reference to cell selection and that illustrated in FIG. 2B is in reference to cell reselection.

Referring to FIG. 2A, as the power of a UE turns on or where the UE transitions from one state to another state or from one mode to another mode (for example, CELL_DCH (CELL_Dedicated CHannel) to idle mode), a cell selection procedure is triggered in step 201.

In step 202, the UE determines whether there exists any cell whose radio strength is to be measured for cell selection. The UE uses one of at least two cell search procedures, including initial cell selection and stored information cell selection. In the initial cell selection procedure, the UE searches for the strongest cell on each carrier until it finds a suitable cell to camp on. In the stored information cell selection procedure, the UE performs a cell selection on cells whose information has been stored until it finds a suitable cell to camp on.

In the presence of a cell to be measured in step 202, the UE measures the radio strength of the cell in step 211. If the measurement satisfies the threshold S in step 212, the UE receives system information from the Node B and thus checks the PLMN to which the cell belongs, cell status information, and the access class barred list of the cell in step 213. If the identity of the PLMN indicates an allowed PLMN for the UE, the cell status information (that is, Cell barred, Cell reserved for operator use, or Cell reservation extension) indicates the cell as not barred, and the access class barred list indicates the access class of the UE as not barred in the cell in step 214, and the UE selects the cell in step 215.

The allowed PLMN type can be GSM-MAP only, ANSI-41 only, or both. For GSM-MAP, the PLMN identity comprises an MCC (Mobile Country Code) and an MNC (Mobile Network Code). The UE compares the PLMN identity with a stored list of available PLMN identities. If there is a matching PLMN identity in the list, the UE considers that the PLMN is allowed for the UE. That is, the UE determines whether the PLMN is allowed for the UE based on its PLMN type and its PLMN ID. An allowed PLMN may be different for each UE.

If any of the PLMN ID, the cell status information, and the access class barred list does not satisfy the cell selection requirements in step 214, the UE does not select the cell and returns to step 202 to determine whether there is another cell to be measured. In the absence of another cell to be measured, the UE performs an any cell selection procedure for an emergency call in step 203. A description of the any cell selection will not be provided herein. A cell in which the UE may attempt emergency calls takes priority in cell selection over a cell in which the UE may not even attempt emergency calls.

FIG. 2B describes a method of performing cell reselection. Referring to FIG. 2B, after being camped on an initial cell, the UE may have to reselect a cell due to factors such as the mobility of the UE and a cell reselection procedure is triggered in step 221. The UE determines if any cells can be measured at step 222. In the presence of a cell to be measured for cell reselection, the UE performs measurements on the cell in step 231 and determines whether the measurements fulfill the threshold S in step 232.

If the measurements fulfill the threshold S, the UE prioritizes the cell according to its ranking R in step 233. Only cells that satisfy the threshold S are prioritized according to their rankings R. If the measurements do not fulfill the threshold S in step 232 or after the cell prioritization in step 233, the UE returns to step 222 to determine whether there remains another cell to be measured. In the presence of another cell to be measured, the above-described procedure is repeated.

In the absence of a cell to be measured for cell reselection in step 222, the UE determines whether at least one of the measured cells of steps 222 through 233 satisfies the threshold S in step 223. The determination can be made by checking a flag value in the UE in step 232 or checking the presence or absence of a cell in a cell ranking list (also referred to as a priority ranking list) with the prioritized cells in step 233.

In the presence of cells in the cell ranking list, the UE selects a cell with the highest ranking and receives system information about the selected cell in step 241. If the PLMN ID, the cell status information, and access class barred list of the selected cell satisfy the requirements in step 242, the UE reselects the cell in step 251. The reselected cell preferably must rank higher than the serving cell.

If any of the PLMN ID, the cell status information, and the access class barred list does not fulfill the requirements in step 242, the UE selects a cell with the second highest rank in the cell ranking list in steps 243 and 244, and returns to step 242. In the absence of a cell in the cell ranking list in step 243, the UE performs an any cell selection to find a cell for an emergency service in step 261.

Similarly, if no cells which were measured in step 222 satisfy the threshold S in step 223, the UE performs an any cell selection to find a cell for an emergency service in step 224.

At least two procedures are possible for cell selection/reselection based on the access class barred list. One procedure is comprised of steps wherein the UE preferably always refers to the access class barred list of a target cell for cell selection/reselection. The other procedure is comprised of steps wherein the UE refers to the access class barred list of the serving cell preferably only when the UE needs to access the network, for example, when the UE receives an indication indicating the start of a specific service from an upper layer (for example, signaling or data transmission start indication) and is to establish an RRC (Radio Resource Control) connection, and if needed, selects/reselects another acceptable cell.

The cell selection/reselection depicted in FIGs. 2A and 2B are performed by preferably always referring to the access class barred list of the target cell. Regarding another cell selection/reselection method according to an embodiment of the present invention, a description will be made in detail below of cell selection/reselection for the case where access class barred lists are made separately for a CS domain and a PS domain for DSAC (Domain Specific Access Class) restriction.

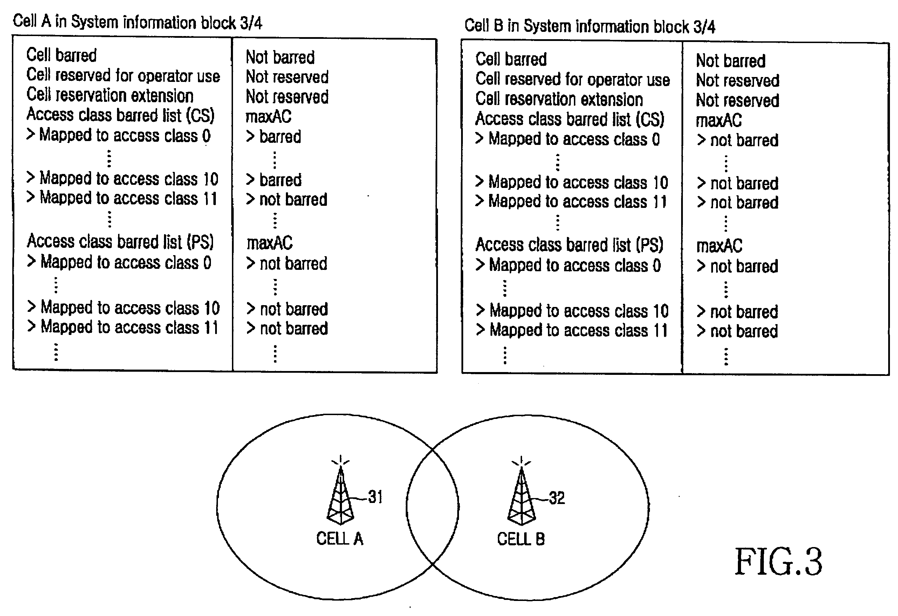

FIG. 3 illustrates transmission of separate access class barred lists for a CS domain and a PS domain, for use in cell selection/reselection in a mobile communication system according to an embodiment of the present invention. The access class barred lists shown in FIG. 3 are based on the same premise and scenario as that illustrated in FIG. 1, except that the access class barred lists exist separately for the CS domain and the PS domain.

Referring to the example variables of FIG. 3, therefore, cell A and cell B under the coverage of a Node B 31 and a Node B 32 belong to the same PLMN, and the strength measurements of P-CPICH signals from the two cells at the UE satisfy the threshold S. The access class of the UE is 9, for example. Cell A ranks higher than cell B by one level according to their rankings R. In cell A, the access class of the UE is barred in the CS domain, and the access class of the UE is not barred in the PS domain. Cell B ranks lower than cell A by one level. Cell B is allowed for the UE in both the domains.

Since cell A ranks higher than cell B by one level and is allowed for the UE in the PS domain, if the UE selects/reselects cell A, it cannot receive a basic service in the CS domain such as a voice call and an emergency service in cell A. Under the same conditions, if the UE selects/reselects cell B, it can receive services in both domains in cell B.

Therefore, if separate access class barred lists exist for the CS domain and the PS domain, prioritization is required concerning the cases of wherein both CS and PS domains are accessible, wherein only the CS domain is accessible, and wherein only the PS domain is accessible, for cell selection/reselection.

In this example, embodiments of the present invention propose a cell selection/reselection method in which the above accessible domains are prioritized, and the UE preferably always selects/reselects a cell according to the priority levels. Embodiments of the present invention further propose another cell selection/reselection method in which the UE receives signaling or a data transmission indication in a specific domain from the upper layer, and performs a cell reselection preferably only if the access class barred list indicates the serving cell as barred in the specific domain.

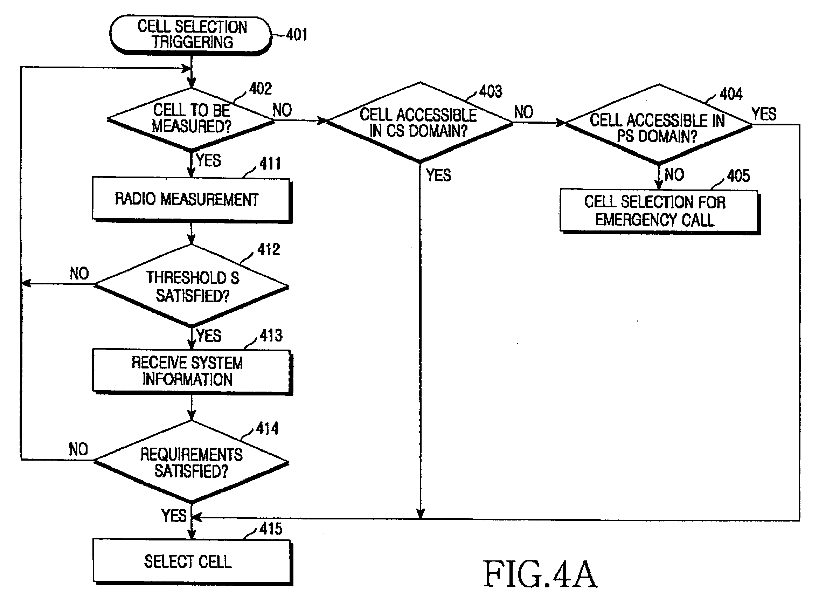

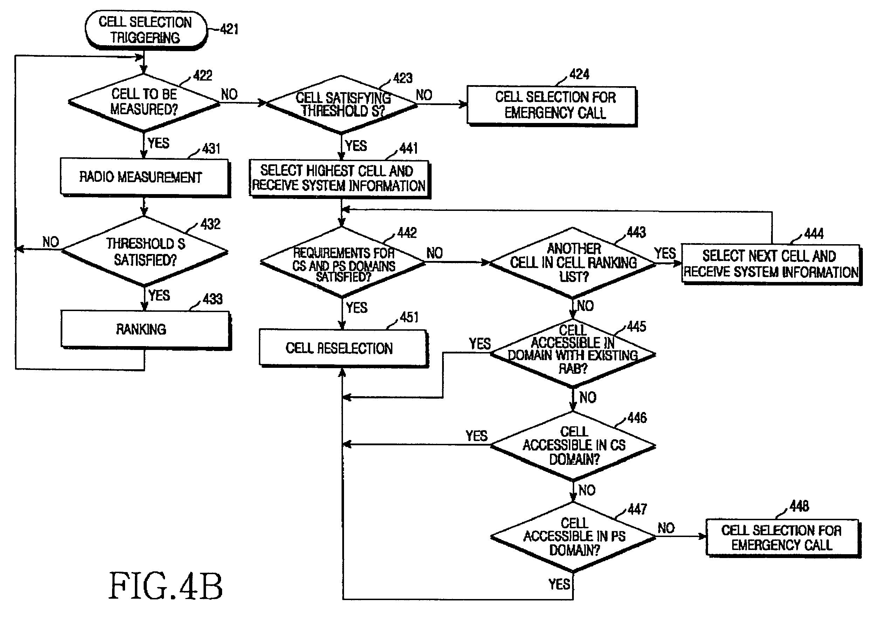

As illustrated in FIGs. 4A and 4B, the priority levels of accessible domains for each access class are notified to the UE, or the UE performs cell selection/reselection according to a predetermined priority rule (for example, a first priority when both CS and PS domains are accessible, a second priority when the CS domain only is accessible, and a third priority when the PS domain only is accessible).

FIGs. 4A and 4B are flowcharts illustrating a cell selection/reselection method in the UE in a mobile communication system according to another embodiment of the present invention. The procedures are performed in the UE in the case where access class barred lists are separately made for the CS domain and the PS domain.

Referring to FIG. 4A, when a cell selection procedure is triggered in step 401, the UE checks whether there is a cell whose radio strength is to be measured for cell selection in step 402. Step 402 is performed to determine whether measurements have been performed on all cells in the initial cell selection for searching for a cell having the strongest radio strength on each carrier or in the stored cell selection for finding a suitable cell based on stored cell information.

In the presence of a cell to be measured, the UE performs a measurement on the cell in step 411. As described above, the strength of a P-CPICH is measured. In step 412, the UE determines whether the P-CPICH measurement satisfies the threshold S. If the P-CPICH measurement does not satisfy the threshold S, the UE returns to step 402 and performs a measurement on another cell to be measured.

If the P-CPICH measurement satisfies the threshold S in step 412, the UE receives system information about the cell from the Node B in step 413. If the received system information indicates that the cell belongs to an allowed PLMN, cell status is indicated as not barred, and the access class of the UE is not barred for both CS and PS domains in the cell in step 414, the UE selects the cell in step 415. If at least one of the PLMN ID, the cell status, and the access class barred lists does not satisfy the requirement, the UE returns to step 402 and performs a measurement on another cell to be measured.

In the absence of a cell to be measured in step 402, the UE determines whether there is a cell which belongs to the allowed PLMN, whose cell status is indicated as not barred, and which is allowed in the CS domain only for the UE among the measured cells in step 403. In the presence of such a cell, the UE selects the cell in step 415. If no cells are accessible for the CS domain only in step 403, the UE determines whether there is a cell which belongs to the allowed PLMN, whose status is indicated as not barred, and which is accessible in the PS domain only among the measured cells in step 404. In the presence of such a cell, the UE selects the cell in step 415. In the absence of a cell accessible in the PS domain only, the UE performs an any cell selection for an emergency service in step 405.

While the CS domain takes priority over the PS domain in the exemplary procedure of FIGs. 4A and 4B, the priority levels of the CS domain and the PS domain may be different for different UEs. For some UEs, the PS domain is higher in priority than the CS domain. Information about the priority levels of the CS and PS domains is stored in the UE so that the UE puts the CS or PS domain priority behind the other domain in cell selection/reselection according to the priority information.

Referring to FIG 4B, when a cell reselection procedure is triggered in step 421, the UE checks whether there is a cell whose radio strength is to be measured for cell reselection in step 422. Cells to be measured are known from information about neighbor cells for cell selection as system information received from a UTRAN (UMTS Terrestrial Radio Access Network). In the presence of a cell to be measured in step 422, the UE performs a measurement on the cell in step 431. As described above, the strength of a P-CPICH is measured. In step 432, the UE determines whether the P-CPICH measurement satisfies the threshold S.

If the P-CPICH measurement does not satisfy the threshold S, the UE performs a measurement on another cell in steps 422 and 431. If the P-CPICH measurement satisfies the threshold S in step 432, the UE calculates the ranking R of the cell and prioritizes measured cells in step 433. Then the UE returns to steps 422 and 431 to perform a measurement on another cell and determines whether the measurement satisfies the threshold S. If the measurement satisfies the threshold S, the UE calculates the ranking R of the cell and updates a cell ranking list including cells that satisfy the threshold S in step 433.

In the absence of a cell to be measured in step 422, the UE determines whether there is at least one of the measured cells of steps 422 through 433 satisfying the threshold S in step 423. This step is equivalent to checking whether the cell ranking list is Null. In the presence of at least one cell in the cell ranking list in step 423, the UE selects a cell at the highest ranking in the cell ranking list and receives and interprets the system information of the selected cell in step 441.

If the selected cell belongs to an allowed PLMN and has a cell status indicated as not barred, the UE determines whether the access class of the UE is not barred in the CS and PS domains in the cell in step 442. If it is not, the UE reselects the cell in step 451. If the requirements are not satisfied in step 442, the UE determines whether there is another cell in the cell ranking list in step 443. In the presence of another cell, the UE selects a cell with the second highest ranking and interprets its system information in step 444 and checks whether the requirements are satisfied in step 442.

If none of the cells in the cell ranking list satisfy the requirements, the UE checks whether there is a cell which belongs to the allowed PLMN and is accessible in the domain with a current RAB (Radio Access Bearer) in step 445. In the presence of such a cell, the UE goes to step 451. The requirements of step 445 preferably apply only when an RAB exists in the current CS or PS domain. If the UE is now receiving a CS or PS service, step 445 enables the current service to continue.

If the UE does not have an RAB in either the CS or PS domain or every cell is barred in the CS or PS domain with an RAB in step 445, the UE determines whether there is a cell which belongs to the allowed PLMN, whose cell status is not barred and which is accessible in the CS domain only in step 446. In the presence of such a cell, the UE reselects the cell in step 451. If no cells are accessible for the CS domain only, the UE determines whether there is a cell accessible in the PS domain only in step 447. In the presence of such a cell, the UE reselects the cell in step 451. As described above, the priority levels of the CS and PS domains may differ for different UEs in cell selection/reselection.

In the absence of a cell accessible for the PS domain only, the UE performs an any cell selection for an emergency service in step 448.

In the case where separate access class barred lists are made for the CS and PS domains, if the UE cannot find an accessible cell in both the CS and PS domains, it performs a cell selection/reselection according to the predetermined priority levels of the CS and PS domains in the procedures of FIGs. 4A and 4B. Cells are prioritized in a descending priority order of a cell accessible in both the CS and PS domains, a cell accessible in a domain where a current RAB is connected, if any, a cell accessible in the CS domain, and a cell accessible in the PS domain. The UE in this example, performs a cell selection/reselection according to this fixed priority rule.

However, the procedures of FIGs. 4A and 4B are merely an exemplary application to which the present invention is not limited. For instance, cells can be prioritized by signaling from the network. Alternatively, in the absence of a cell accessible in both the CS and PS domains, cells for cell selection/reselection can be prioritized by the upper layer with user intervention.

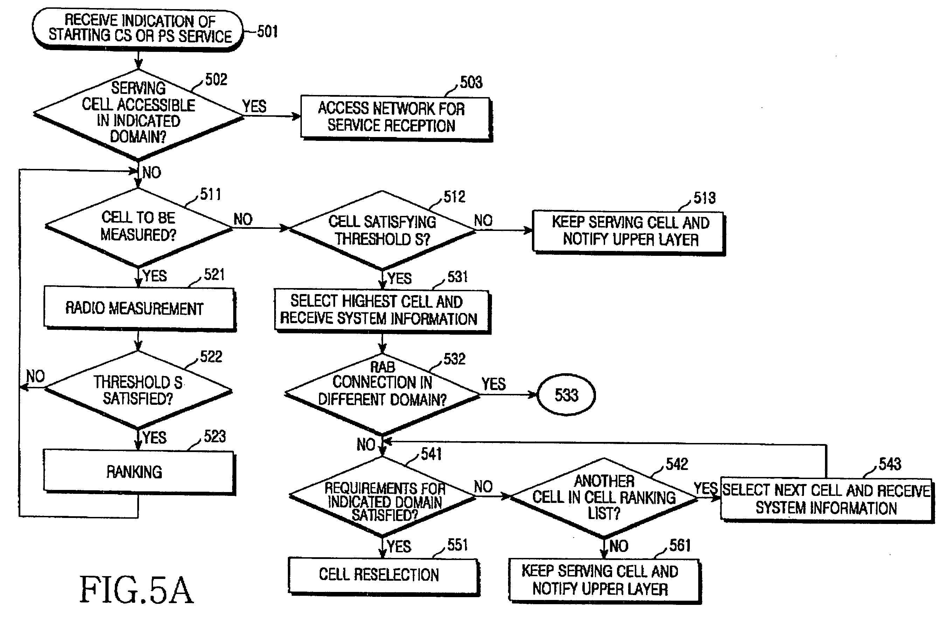

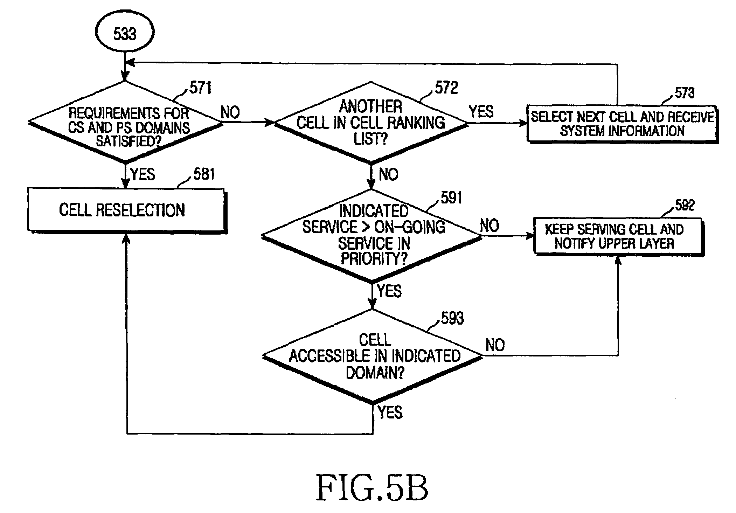

FIGs. 5A and 5B are flowcharts illustrating cell reselection in the UE in a mobile communication system according to another embodiment of the present invention. The cell reselection is performed in a different manner from those

illustrated in FIGS. 3B and 4B, in which accessibility to the CS or PS domain is considered. According to the procedures of FIGs. 5A and 5B, the UE receives signaling or a data transmission indication in a specific domain from the upper layer. If the access class barred list of the serving cell indicates the serving cell as barred in the specific domain, the UE performs the cell reselection.

The procedure illustrated in FIGS. 5A and 5B can be applied to the embodiments illustrated in FIGs. 2A and 2B. In FIG. 3 and FIGs. 4A and 4B, the UE checks whether a cell is accessible in the CS or PS domain before cell reselection, and determines whether to perform a cell reselection according to the check result. In contrast, the cell reselection procedure illustrated in FIGs. 5A and 5B is carried out basically as defined by the 3GPP R99. It is triggered only when the access class barred lists indicate the CS or PS domain indicated by the upper layer as barred in the cell when the upper layer indicates starting of a CS or PS service.

That is, the cell reselection is triggered upon receipt of an indication indicating starting of a CS or PS service from the upper layer. An embodiment of the present invention illustrated in FIGs. 5A and 5B can be implemented in conjunction with that illustrated in FIGs. 4A and 4B. To be more specific, the UE performs cell selection/reselection without considering the congestion of a target cell as defined by the 3GPP before a service starts. Upon receipt of signaling indicating access to a specific domain for the service or an indication indicating data transmission in the specific domain from the upper layer, the UE performs the procedure of FIGs. 5A and 5B, and then performs the procedures of FIGs. 4A and 4B for cell selection/reselection triggered by the mobility of the UE until the service ends.

Referring to FIGs. 5A and 5B, upon receipt of an indication indicating starting of a CS or PS service from the upper layer in step 501, the UE determines whether the access class barred lists of the serving cell indicate the access class of the UE as barred for the indicated CS or PS domain in the serving cell in step 502. If the indicated domain of the cell is disallowed for the UE, the UE determines whether there is a cell to be measured for cell reselection in step 511. Cells to be measured are obtained from information about neighbor cells for cell reselection received as system information from the UTRAN.

In the presence of a cell to be measured in step 511, the UE performs a measurement on the cell in step 521. As described before, the strength of a P-CPICH is measured. In step 522, the UE determines whether the P-CPICH measurement satisfies the threshold S. If the P-CPICH measurement does not satisfy the threshold S, the UE performs a measurement on another cell in steps 511 and 521.

If the P-CPICH measurement satisfies the threshold S in step 522, the UE calculates the ranking R of the cell and prioritizes measured cells in step 523. Then the UE repeats steps 511, 521, 522, and 523 until no cell remains to be measured.

If no cell remains in step 511, the UE determines whether there is at least one of the measured cells of steps 502 through 523 satisfying the threshold S in step 512. This step is equivalent to checking whether the cell ranking list is Null. In the presence of at least one cell in the cell ranking list in step 512, the UE selects a cell at the highest ranking in the cell ranking list and receives and interprets the system information of the selected cell in step 531.

If the UE has an RAB connection in the other domain in step 532, it goes to step 533 in FIG. 5B. If the UE has no RAB connection in the other domain, the UE goes to step 541. If the selected cell belongs to an allowed PLMN and cell status is indicated as not barred, the UE determines whether the access class of the UE is indicated as barred for the indicated domain in the cell in step 541.

If the requirements are all satisfied, the UE reselects the cell in step 551. If all the requirements are not satisfied in step 541, the UE determines whether there is another cell in the cell ranking list in step 542. In the presence of another cell, the UE selects a cell with the second highest ranking and interprets its system information in step 543 and returns to step 541. In the absence of any cell in the cell ranking list, the UE stays in the current cell and notifies the upper layer that the current cell is kept in step 561.

Proceeding to FIG. 5B, if the UE has already been connected to the other domain in step 532, the UE checks whether the cell belongs to an allowed PLMN, whether cell status is indicated as not barred, and whether the access class of the UE is indicated as not barred for both the CS and PS domains in the access class barred lists in step 571. If all the requirements of step 571 are satisfied, the UE reselects the cell in step 581.

If all the requirements are not satisfied, the UE determines whether another cell remains in the cell ranking list in step 572. In the presence of another cell, the UE selects a cell with the second highest ranking and interprets its system information in step 573 and returns to step 571. If no more cells remain in the cell ranking list in step 572, the UE determines whether the service indicated by the upper layer has a higher priority level than the on-going service in the other domain in step 591. The priority levels can be preset or set by user intervention.

If the on-going service is higher in priority than the indicated service in step 591, the UE stays in the current cell rather than reselecting another cell and notifies the upper cell that the current cell is kept in step 592. If the indicated service has a higher priority than the on-going service in step 591, the UE checks whether the cell belongs to the allowed PLMN, whether the cell status is not barred, and whether the access class of the UE is indicated as not barred for the indicated domain in the access class barred list in step 593. If the cell is accessible, the UE reselects the cell in step 581. If the cell is not accessible, the UE goes to step 592.

In accordance with embodiments of the present invention as described above, a UE performs cell selection/reselection, taking into account the congestion status of a target cell in a mobile communication system, thereby ensuring continuous service reception for each access class. In addition, if separate access class barred lists for CS and PS domains are made for a target cell, the domains are prioritized and cell selection/reselection is performed according to the priority levels. Upon receipt of an indication for a specific service from an upper layer, the UE performs cell selection/reselection referring to access class barred lists.

While the present invention has been shown and described with reference to certain exemplary embodiments thereof, it will be understood by those skilled in the art that various changes in form and details may be made therein without departing from the spirit and scope of the invention as defined by the following appended claims.

**Claims**

1.   A cell selection method in a user equipment (UE) in a mobile communication system, comprising the steps of:

       measuring a radio strength of a cell being a candidate for cell selection;
       determining whether the radio strength satisfies a predetermined threshold;
       receiving system information including an access class barred list from a Node B that manages the cell if the radio strength satisfies the threshold; and
       selecting the cell according to the access class barred list.

2.   The cell selection method of claim 1, further comprising the step of:

       determining whether to perform the step of selecting the cell by referring to cell status information and information about a public land mobile network (PLMN) to which the cell belongs in the system information.

3.   The cell selection method of claim 1, further comprising the step of:

       selecting a cell for an emergency service if no cells to be measured for cell selection exist or if the access class barred list indicates that the cell is not accessible to the UE.

4.   A cell reselection method in a user equipment (UE) in a mobile communication system, comprising the steps of:

       measuring radio strengths of cells being candidates for cell reselection;
       determining whether the radio strengths satisfy a predetermined threshold;
       prioritizing to rank cells that satisfy the threshold;
       receiving system information including an access class barred list from a Node B managing a cell that satisfies the threshold and ranks highest; and
       selecting the cell if the system information allows the UE to select the cell and the access class barred list does not indicate that the cell is not accessible to the UE.

5.   The cell reselection method of claim 4, further comprising the step of:

       determining whether to perform the step of selecting the cell by referring to cell status information and information about a public land mobile network (PLMN) to which the cell belongs in the system information.

6.   The cell reselection method of claim 4, further comprising the steps of:

       selecting a cell with a second highest ranking if the system information does not allow the UE to select the cell; and
       receiving system information from a Node B that manages the cell with the second highest ranking.

7.   The cell reselection method of claim 4, further comprising the step of:

       selecting a cell for an emergency service if no cells exist as candidates for cell reselection.

8.   A cell selection method in a user equipment (UE) that distinguishes a plurality of service domains for cell selection in a mobile communication system, comprising the steps of:

measuring a radio strength of a cell being a candidate for cell selection;
determining whether the radio strength satisfies a predetermined threshold;
receiving system information including access class barred lists for the service domains from a Node B that manages the cell if the radio strength satisfies the threshold; and
selecting the cell if the access class barred lists indicate that the cell is accessible to the UE in the service domains.

9. The cell selection method of claim 8, further comprising the step of:

determining whether to perform the step of selecting the cell by referring to cell status information and information about a public land mobile network (PLMN) to which the cell belongs in the system information.

10. The cell selection method of claim 8, wherein the service domains comprise a circuit service (CS) domain and a packet service (PS) domain.

11. The cell selection method of claim 10, further comprising the steps of:

determining whether there is a cell which an access class barred list of the CS domain indicates as accessible in the CS domain if no cells to be measured for cell selection exist or if no cells are accessible in all of the service domains; and
selecting the cell accessible in the CS domain.

12. The cell selection method of claim 11, further comprising the steps of:

determining whether there is a cell which an access class barred list of the PS domain indicates as accessible in the PS domain in the absence of a cell accessible in the CS domain; and
selecting the cell accessible in the PS domain.

13. The cell selection method of claim 12, further comprising the step of:

selecting a cell for an emergency service if the access class barred lists indicate no cells as accessible in one of the PS domain and the CS domain.

14. A cell reselection method in a user equipment (UE) that distinguishes a plurality of service domains for cell reselection in a mobile communication system, comprising the steps of:

measuring radio strengths of cells being candidates for cell reselection;
determining whether the radio strengths satisfy a predetermined threshold;
prioritizing to rank cells that satisfy the threshold;
receiving system information including access class barred lists for the service domains from a Node B managing a cell with a highest ranking among the prioritized cells; and
selecting the cell if the access class barred lists indicate the cell as accessible in all of the service domains.

15. The cell reselection method of claim 14, further comprising the step of:

determining whether to perform the step of selecting the cell by referring to cell status information and information about a public land mobile network (PLMN) to which the cell belongs in the system information.

16. The cell reselection method of claim 14, wherein the service domains comprise a circuit service (CS) domain and a packet service (PS) domain.

17. The cell reselection method of claim 16, further comprising the steps of:

selecting a cell with a second highest ranking if the system information does not allow the UE to select the cell or if the access class barred lists indicate the cell as not accessible in all of the service domains; and
receiving system information from a Node B that manages the cell with the second highest ranking.

18. The cell reselection method of claim 17, further comprising the steps of:

determining whether there is a cell of which the access class barred list of a service domain with an existing radio access bearer (RAB) indicates as accessible in the absence of the cell with the second highest ranking; and selecting the cell.

19. The cell reselection method of claim 18, further comprising the steps of:

determining whether there is a cell of which the access class barred list of the CS domain indicates as accessible in the absence of a cell accessible in the service domain with the existing RAB; and selecting the cell.

20. The cell reselection method of claim 18, further comprising the steps of:

determining whether there is a cell of which the access class barred list of the PS domain indicates as accessible in the absence of a cell accessible in the CS domain; and selecting the cell.

21. The cell reselection method of claim 20, further comprising the step of:

selecting a cell for an emergency service in the absence of a cell accessible in one of the CS and PS domains according to access class barred lists of the cell.

22. A cell reselection method in a user equipment (UE) that distinguishes a plurality of service domains for cell reselection in a mobile communication system, comprising the steps of:

receiving an indication indicating starting of a service in one of the service domains from an upper layer; determining whether the access class barred list of the indicated service domain indicates a serving cell as accessible; measuring radio strengths of cells being candidates for cell reselection if the serving cell is not indicated as accessible; determining whether the radio strengths satisfy a predetermined threshold; prioritizing to rank cells that satisfy the threshold; receiving system information including access class barred lists for the plurality of service domains from a Node B managing a cell with a highest ranking among the prioritized cells; and selecting the cell if the access class barred list of the indicated service domain indicates the cell as accessible.

23. The cell reselection method of claim 22, further comprising the step of:

determining whether to perform the step of selecting the cell by referring to cell status information and information about a public land mobile network (PLMN) to which the cell belongs in the system information.

24. The cell reselection method of claim 22, further comprising the step of:

maintaining the serving cell in the absence of a cell that satisfies the threshold.

25. The cell reselection method of claim 22, further comprising the steps of:

selecting a cell with a second highest ranking if the system information does not allow the UE to select the cell or if the access class barred list of the indicated service domain indicates the cell as not accessible; and receiving system information from a Node B that manages the cell with the second highest ranking.

26. The cell reselection method of claim 22, further comprising the steps of:

determining whether the UE has a radio access bearer (RAB) connection in a service domain other than the indicated service domain; and selecting the cell if the UE has the RAB connection in the service domain and the access class barred lists of all the service domains indicate the cell as accessible.

27. The cell reselection method of claim 26, further comprising the steps of:

comparing a service associated with the RAB with the service in the indicated service domain if the UE has the RAB connection in the service domain and if the access class barred lists of all the service domains indicate the cell as not accessible; and

selecting a cell of which the access class barred list of the indicated service domain indicates the cell as accessible if the service in the indicated service domain has a higher priority level than the service associated with the RAB.

28. The service reselection method of claim 27, further comprising the step of:

maintaining the serving cell if the service in the indicated service domain does not have a higher priority level than the service associated with the RAB.

29. The service reselection method of claim 22, further comprising the step of:

accessing the indicated service domain in the serving cell if the access class barred list of the indicated service domain of the serving cell indicates the serving cell as accessible.

30. A mobile communication system comprising:

a user equipment (UE) for measuring radio strengths of cells being candidates for cell reselection, determining whether the radio strengths satisfy a predetermined threshold, prioritizing to rank cells that satisfy the threshold, receiving system information including access class barred lists for a plurality of service domains from a Node B managing a cell with a highest ranking among the prioritized cells, and selecting the cell if the access class barred lists indicate the cell as accessible in all of the service domains; and

at least one Node B for managing at least one cell that the UE can access wirelessly and for transmitting the system information to the UE.

31. The mobile communication system of claim 30, wherein if no cells are accessible in all of the service domains, the UE is configured to determine whether there is a cell of which the access class barred list of at least one service domain indicates the cell as accessible, and select the cell in the presence of a cell accessible in the at least one service domain.

32. The mobile communication system of claim 30, wherein in the absence of a cell accessible in the at least one service domain, the UE is configured to select a cell for an emergency service.

33. The mobile communication system of claim 30, wherein the UE is configured to determine whether there is a cell of which the access class barred list of a service domain indicated for starting of a service by an upper layer indicates the cell as accessible, and select the cell in the presence of a cell accessible in the indicated service domain.

34. The mobile communication system of claim 30, wherein in the absence of a cell accessible in all of the service domains, the UE is configured to determine which service has a higher priority level between the service indicated by the upper layer and a service associated with an existing radio access bearer (RAB), determine whether there is a cell of which the access class barred list of a service with the higher priority level indicates the cell as accessible, and select the cell in the presence of the cell accessible in the service domain of the higher-priority service.

Cell A in System information block 3/4

| Cell barred | Not barred |
|---|---|
| Cell reserved for operator use | Not reserved |
| Cell reservation extension | Not reserved |
| Access class barred list | maxAC |
| > Mapped to access class 0 | > barred |
| ⋮ | ⋮ |
| > Mapped to access class 10 | > barred |
| > Mapped to access class 11 | > not barred |
| ⋮ | ⋮ |

Cell B in System information block 3/4

| Cell barred | Not barred |
|---|---|
| Cell reserved for operator use | Not reserved |
| Cell reservation extension | Not reserved |
| Access class barred list | maxAC |
| > Mapped to access class 0 | > not barred |
| ⋮ | ⋮ |
| > Mapped to access class 10 | > not barred |
| >Mapped to access class 11 | > not barred |
| ⋮ | ⋮ |

CELL A —11    CELL B —12

FIG.1

EP 1 626 605 A1

```
                      ┌──────────────────────┐
                      │   CELL SELECTION     │──201
                      │     TRIGGERING       │
                      └──────────────────────┘
                                 │
          ┌──────────────────────┤
          │                      ▼                    ┌─────────────────────┐
          │                   ╱202╲          NO       │  CELL SELECTION FOR │──203
          │            ╱  CELL TO BE  ╲───────────────▶│   EMERGENCY CALL    │
          │            ╲  MEASURED?   ╱                └─────────────────────┘
          │             ╲           ╱
          │                  │ YES
          │                  ▼
          │         ┌──────────────────┐
          │         │ RADIO MEASUREMENT │──211
          │         └──────────────────┘
          │                  │
          │                  ▼
          │          NO   ╱212╲
          │◀─────────────╱ THRESHOLD S ╲
          │              ╲  SATISFIED? ╱
          │               ╲          ╱
          │                  │ YES
          │                  ▼
          │         ┌──────────────────┐
          │         │  RECEIVE SYSTEM  │──213
          │         │   INFORMATION    │
          │         └──────────────────┘
          │                  │
          │                  ▼
          │          NO   ╱214╲
          └─────────────╱ REQUIREMENTS ╲
                        ╲  SATISFIED?  ╱
                         ╲           ╱
                            │ YES
                            ▼
                   ┌──────────────────┐
                   │   SELECT CELL    │──215
                   └──────────────────┘
                            │
                            ▼
                      ┌──────────┐
                      │   END    │
                      └──────────┘
```

# FIG.2A

FIG.2B

EP 1 626 605 A1

Cell A in System information block 3/4

| | |
|---|---|
| Cell barred | Not barred |
| Cell reserved for operator use | Not reserved |
| Cell reservation extension | Not reserved |
| Access class barred list (CS) | maxAC |
| > Mapped to access class 0 | > barred |
| ⋮ | ⋮ |
| > Mapped to access class 10 | > barred |
| > Mapped to access class 11 | > not barred |
| ⋮ | |
| Access class barred list (PS) | maxAC |
| > Mapped to access class 0 | > not barred |
| ⋮ | ⋮ |
| > Mapped to access class 10 | > not barred |
| > Mapped to access class 11 | > not barred |
| ⋮ | ⋮ |

Cell B in System information block 3/4

| | |
|---|---|
| Cell barred | Not barred |
| Cell reserved for operator use | Not reserved |
| Cell reservation extension | Not reserved |
| Access class barred list (CS) | maxAC |
| > Mapped to access class 0 | > not barred |
| ⋮ | ⋮ |
| > Mapped to access class 10 | > not barred |
| > Mapped to access class 11 | > not barred |
| ⋮ | ⋮ |
| Access class barred list (PS) | maxAC |
| > Mapped to access class 0 | > not barred |
| ⋮ | ⋮ |
| > Mapped to access class 10 | > not barred |
| > Mapped to access class 11 | > not barred |
| ⋮ | ⋮ |

CELL A ~31    CELL B ~32

FIG.3

EP 1 626 605 A1

CELL SELECTION TRIGGERING — 401

402 — CELL TO BE MEASURED?
NO → 403 — CELL ACCESSIBLE IN CS DOMAIN?
YES → 411 — RADIO MEASUREMENT

403 — CELL ACCESSIBLE IN CS DOMAIN?
NO → 404 — CELL ACCESSIBLE IN PS DOMAIN?
YES → SELECT CELL

404 — CELL ACCESSIBLE IN PS DOMAIN?
YES →
NO → 405 — CELL SELECTION FOR EMERGENCY CALL

411 — RADIO MEASUREMENT → 412 — THRESHOLD S SATISFIED?
NO →
YES → 413 — RECEIVE SYSTEM INFORMATION → 414 — REQUIREMENTS SATISFIED?
NO →
YES → 415 — SELECT CELL

FIG.4A

17

FIG.4B

EP 1 626 605 A1

FIG.5A

EP 1 626 605 A1

533

571
REQUIREMENTS FOR
CS AND PS DOMAINS
SATISFIED?

NO →

572
ANOTHER
CELL IN CELL RANKING
LIST?

YES →

573
SELECT NEXT CELL AND RECEIVE
SYSTEM INFORMATION

YES ↓ 581

CELL RESELECTION

NO ↓

591
INDICATED
SERVICE > ON-GOING
SERVICE IN
PRIORITY?

NO →

592
KEEP SERVING CELL AND
NOTIFY UPPER LAYER

YES ↓

593
CELL
ACCESSIBLE IN INDICATED
DOMAIN?

NO →

YES

FIG.5B

**European Patent Office**

**EUROPEAN SEARCH REPORT**

Application Number

EP 05 01 7547

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "Universal Mobile Telecommunications System (UMTS); User Equipment (UE) procedures in idle mode and procedures for cell reselection in connected mode (3GPP TS 25.304 version 5.5.0 Release 5); ETSI TS 125 304" ETSI STANDARDS, EUROPEAN TELECOMMUNICATIONS STANDARDS INSTITUTE, SOPHIA-ANTIPO, FR, vol. 3-R2, no. V550, June 2004 (2004-06), XP014016747 ISSN: 0000-0001 | 1-7 | H04Q7/38 |
| A | page 11, table 1; page 12, paragraph 4.3 to page 13, par. 5.2; page 17, par. 5.2.3; page 20, par. 5.2.6.1.3, 5.2.6.1.4; page 22, line 1 to page 23, line 1; page 24, par. 5.2.7 to page 26, par. 5.3.1.2 ----- | 8-34 | |
| Y | "3rd Generation Partnership Project; Technical specification Group Services and System Aspects; Access Class Barring and Overload Protection; 3GPP TR 23.898 V1.0.0 Release 6"[Online] 10 June 2004 (2004-06-10), pages 1-14, XP002354979 Retrieved from the Internet: URL:http://www.3gpp.org/ftp/tsg_sa/TSG_SA/ TSGS_24/Docs/PDF/SP-040332.pdf> [retrieved on 2005-11-18] page 5, paragraphs 3.1 and 4.1; page 6, paragraph 5.2 to page 8, paragraph 5.2.2.1; page 9, paragraphs 5.4 and 5.4.1; page 10, lines 1 to 9. ----- | 1-34 | **TECHNICAL FIELDS SEARCHED (IPC)** H04Q |

-/--

The present search report has been drawn up for all claims

| Place of search | Date of completion of the search | Examiner |
|---|---|---|
| Munich | 22 November 2005 | Biyee, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

**EUROPEAN SEARCH REPORT**

Application Number

EP 05 01 7547

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2004/040931 A (RESEARCH IN MOTION LIMITED) 13 May 2004 (2004-05-13)<br>* abstract *<br>* page 2, line 19 - page 6, line 22 *<br>* page 12, line 13 - page 13, line 7 *<br>* page 14, line 27 - page 18, line 33 *<br>* page 22, line 3 - line 14 *<br>* page 23, line 13 - page 26, line 6 *<br>* page 26, line 24 - page 28, line 15 *<br>----- | 1-34 | |
| Y | US 6 334 052 B1 (NORDSTRAND INGRID) 25 December 2001 (2001-12-25) | 1-7 | |
| A | * column 4, line 5 - column 6, line 39 *<br>* column 7, line 30 - column 9, line 20 *<br>* column 9, line 56 - column 12, line 5 *<br>----- | 8-34 | |
| Y | "Digital cellular telecommunications system (Phase 2+); Universal Mobile Telecommunications System (UMTS); Service accessibility (3GPP TS 22.011 version 6.4.0 Release 6); ETSI TS 122 011"<br>ETSI STANDARDS, EUROPEAN TELECOMMUNICATIONS STANDARDS INSTITUTE, SOPHIA-ANTIPO, FR,<br>vol. 3-SA1, no. V640, June 2004 (2004-06), XP014027376<br>ISSN: 0000-0001 | 1-7 | TECHNICAL FIELDS SEARCHED (IPC) |
| A | page 7, paragraph 3.2 to page 11, paragraph 3.2.2.4.3;<br>page 12, paragraphs 4.1 to 4.4;<br>page 13, paragraphs 5.3 and 5.4<br>----- | 8-34 | |
| A | WO 99/22540 A (ERICSSON, INC) 6 May 1999 (1999-05-06)<br>* abstract *<br>* page 4, line 16 - page 5, line 10 *<br>* page 6, line 13 - page 12, line 11 *<br>* page 12, line 19 - page 16, line 11 *<br>----- | 1-7 | |

The present search report has been drawn up for all claims

| Place of search | Date of completion of the search | Examiner |
|---|---|---|
| Munich | 22 November 2005 | Biyee, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

## ANNEX TO THE EUROPEAN SEARCH REPORT
## ON EUROPEAN PATENT APPLICATION NO.

EP 05 01 7547

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2005

| Patent document cited in search report | | Publication date | Patent family member(s) | | Publication date |
|---|---|---|---|---|---|
| WO 2004040931 | A | 13-05-2004 | AU | 2003275872 A1 | 25-05-2004 |
| | | | BR | 0315841 A | 27-09-2005 |
| | | | CA | 2504497 A1 | 13-05-2004 |
| | | | EP | 1566071 A2 | 24-08-2005 |
| US 6334052 | B1 | 25-12-2001 | AU | 741961 B2 | 13-12-2001 |
| | | | AU | 6427698 A | 22-09-1998 |
| | | | BR | 9808196 A | 16-05-2000 |
| | | | CN | 1516509 A | 28-07-2004 |
| | | | CN | 1516510 A | 28-07-2004 |
| | | | CN | 1255275 A | 31-05-2000 |
| | | | EE | 9900394 A | 17-04-2000 |
| | | | EP | 0965244 A2 | 22-12-1999 |
| | | | HK | 1028517 A1 | 18-03-2005 |
| | | | JP | 2001513971 T | 04-09-2001 |
| | | | WO | 9839940 A2 | 11-09-1998 |
| | | | TR | 9902478 T2 | 21-03-2000 |
| WO 9922540 | A | 06-05-1999 | AU | 1091599 A | 17-05-1999 |

EPO FORM P0459

For more details about this annex : see Official Journal of the European Patent Office, No. 12/82